(19) Europäisches Patentamt
European Patent Office
Office européen des brevets

(11) EP 3 889 428 B1

(12) # FASCICULE DE BREVET EUROPEEN

(45) Date de publication et mention de la délivrance du brevet:
**06.03.2024 Bulletin 2024/10**

(21) Numéro de dépôt: **21164573.4**

(22) Date de dépôt: **24.03.2021**

(51) Classification Internationale des Brevets (IPC):
***F04B 9/12*** (2006.01) ***F04B 9/125*** (2006.01)
***F04B 9/129*** (2006.01) ***F04B 27/00*** (2006.01)
***F04B 31/00*** (2006.01) ***F04B 35/00*** (2006.01)
***F04B 37/18*** (2006.01)

(52) Classification Coopérative des Brevets (CPC):
**F04B 27/00; F04B 9/1215; F04B 9/125; F04B 9/1295; F04B 31/00; F04B 35/00; F04B 37/18;** Y02E 60/50

(54) **SYSTÈME DE COMPRESSION PASSIVE À PISTON**

PASSIVES KOMPRESSIONSSYSTEM MIT KOLBEN

PASSIVE COMPRESSION SYSTEM WITH PISTON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2020 FR 2003376**

(43) Date de publication de la demande:
**06.10.2021 Bulletin 2021/40**

(73) Titulaire: **Commissariat à l'énergie atomique et aux énergies alternatives**
**75015 Paris (FR)**

(72) Inventeurs:
- **PHAM, Quynh-Trang**
**38054 GRENOBLE Cedex 09 (FR)**
- **CHAISE, Albin**
**38054 GRENOBLE Cedex 09 (FR)**
- **DUCROS, Frédéric**
**38054 GRENOBLE Cedex 09 (FR)**

(74) Mandataire: **Brevalex**
**Tour Trinity**
**1 B Place de la Défense**
**92400 Courbevoie (FR)**

(56) Documents cités:
**WO-A1-2018/107511**
**DE-U1-202004 011 635**
**US-A- 5 863 186**
**US-A1- 2016 153 445**
**US-A1- 2018 347 553**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 889 428 B1

## Description

### DOMAINE TECHNIQUE

La présente invention se rapporte au domaine général des compresseurs à piston pour la compression d'un fluide, notamment un gaz.

En particulier, l'invention concerne un système de compression passive à piston dans lequel un fluide, en particulier un gaz, est comprimé d'une basse pression initiale à une pression plus élevée en utilisant le travail obtenu à partir de la dépressurisation ou détente d'un autre fluide, en particulier un gaz, comprimé préexistant.

### ÉTAT DE LA TECHNIQUE ANTÉRIEURE

Les énergies renouvelables présentent l'inconvénient d'être intermittentes et de produire parfois plus d'électricité que le réseau n'en nécessite. Un excès d'électricité renouvelable peut être utilisé pour produire de l'hydrogène grâce à l'électrolyse. Il s'agit d'un procédé électrolytique qui décompose l'eau en dioxygène et dihydrogène gazeux à l'aide d'un courant électrique. Ce procédé prend généralement l'appellation d'électrolyse de l'eau à haute température (EHT), en particulier d'électrolyse de la vapeur d'eau à haute température (EVHT), respectivement désignées par les appellations anglaises « High Temperature Electrolysis » (HTE) et « High Temperature Steam Electrolysis » (HTSE). A la sortie d'un électrolyseur, l'hydrogène est généralement sous pression entre 10 et 100 bar. Cet hydrogène comprimé peut être stocké, injecté dans un réseau de gaz ou reconverti en électricité à l'aide d'une pile à combustible, notamment une pile à combustible à oxyde solide, désignée habituellement par l'acronyme SOFC pour « Solid Oxide Fuel Cells » en anglais.

Au cours de ce transfert, une dépressurisation partielle de l'hydrogène est souvent réalisée. Aussi, la dépressurisation de cet hydrogène comprimé libère un certain travail qui peut être utilisé pour d'autres applications.

Il existe ainsi un besoin pour bénéficier d'un tel travail libéré par la dépressurisation d'un fluide, notamment d'un gaz, comprimé, notamment pour permettre la compression d'un autre fluide, notamment un gaz, au lieu par exemple d'utiliser un compresseur de gaz conventionnel.

On connaît de la demande de brevet US 2007/0116588 A1, un compresseur à piston, utilisé pour comprimer des milieux gazeux, comprenant un piston différentiel pourvu d'une première partie de piston et d'une deuxième partie de piston disposées sur un axe. La première partie de piston, définissant l'extrémité avant du piston à gradins, est agencée dans un premier cylindre. Une chambre de travail est formée par le premier cylindre situé au niveau d'un clapet. Une autre chambre de travail annulaire est agencée dans un deuxième cylindre de la deuxième partie de piston. Pendant le mouvement descendant du piston, le piston comprime le gaz dans la chambre. Lorsque le piston à gradins se déplace dans le sens opposé, le processus est inversé. Ce piston est entraîné par un entraînement à vibrations, par exemple par le biais d'un entraînement à manivelle.

Par ailleurs, la demande internationale WO 92/01171 A1 divulgue un dispositif de compresseur à ressort comprenant deux pistons dans deux chambres communicantes. Lorsqu'une force est appliquée pour déplacer le premier piston dans le premier cylindre, le fluide du premier piston s'oppose au mouvement dans la première chambre. Ceci, à son tour, provoque le déplacement du second piston dans le second cylindre contre la résistance du gaz dans la seconde chambre. Il en résulte une résistance élastique à la dépression du premier piston et un stockage d'énergie dans le dispositif. US 2016/153445 montre un système de compression. Ce système n'est pas actionné par une réaction de méthanation.

### EXPOSÉ DE L'INVENTION

L'invention a pour but de remédier au moins partiellement aux besoins mentionnés ci-dessus et aux inconvénients relatifs aux réalisations de l'art antérieur.

L'invention comme défini par les revendications ajoutées, utilise un système de compression passive à piston pour la compression d'un deuxième fluide par la détente d'un premier fluide comprimé, comportant au moins :

- une enceinte fermée, notamment de forme cylindrique, délimitée par une paroi comprenant notamment une surface intérieure et une surface extérieure,
- un piston, situé à l'intérieur de l'enceinte et mobile en translation selon un axe de translation à la suite de la détente du premier fluide comprimé,
- une première chambre de volume variable, destinée à contenir au moins une partie du premier fluide comprimé, située à l'intérieur de l'enceinte et délimitée en partie par le piston,
- une deuxième chambre de volume variable, destinée à contenir au moins une partie du deuxième fluide à comprimer, située à l'intérieur de l'enceinte et délimitée en partie par le piston,

les première et deuxième chambres étant séparées l'une de l'autre par au moins le piston,

la première chambre comportant des premiers moyens d'admission, formés notamment au travers de la paroi de l'enceinte, d'au moins une partie du premier fluide dans la première chambre, et des premiers moyens d'évacuation, formés notamment au travers de la paroi de l'enceinte, d'au moins une partie du premier fluide en dehors de la première chambre,

la deuxième chambre comportant des deuxièmes moyens d'admission, formés notamment au travers de la paroi de l'enceinte, d'au moins une partie du deuxième fluide dans la deuxième chambre, et des deuxièmes moyens d'évacuation, formés notamment au travers de la paroi de l'enceinte, d'au moins une partie du deuxième fluide en dehors de la deuxième chambre,

le piston étant configuré pour faire varier la pression du premier fluide dans la première chambre et la pression du deuxième fluide dans la deuxième chambre par déplacement en translation selon l'axe de translation.

Le système de compression peut en outre comporter l'une ou plusieurs des caractéristiques suivantes prises isolément ou suivant toutes combinaisons techniques possibles.

Les premiers moyens d'admission, les premiers moyens d'évacuation, les deuxièmes moyens d'admission et/ou les deuxièmes moyens d'évacuation peuvent comporter une soupape.

La section de la première chambre, mesurée perpendiculairement à l'axe de translation, peut être différente de la section de la deuxième chambre, mesurée perpendiculairement à l'axe de translation. En variante, la section de la première chambre, mesurée perpendiculairement à l'axe de translation, peut être identique à la section de la deuxième chambre, mesurée perpendiculairement à l'axe de translation.

Par ailleurs, selon une premier exemple de réalisation, au moins un organe de rappel élastique, notamment un ressort, peut être positionné entre le piston et la deuxième chambre, configuré pour être comprimé par le piston en cas de déplacement en translation du piston vers la deuxième chambre et configuré pour être détendu en cas de déplacement en translation du piston vers la première chambre.

Ledit au moins un organe de rappel élastique peut être en appui contre le piston à une première extrémité et en appui contre au moins un élément de support à une deuxième extrémité, ledit au moins un élément de support étant situé entre la paroi de l'enceinte et délimitant en partie la deuxième chambre.

De plus, le piston peut présenter, lorsqu'observé en coupe dans un plan contenant l'axe de translation, une forme en « T ».

Selon un deuxième exemple de réalisation, l'enceinte peut comporter un élément de séparation, fixé à l'intérieur de l'enceinte et formant une portion gauche de l'enceinte et une portion droite de l'enceinte, ledit élément de séparation comprenant une ouverture au travers de laquelle est apte à se déplacer le piston en translation selon l'axe de translation, ledit élément de séparation délimitant en partie la première chambre.

De plus, le piston peut présenter, lorsqu'observé en coupe dans un plan contenant l'axe de translation, une forme en « H », comportant un montant vertical gauche, un montant vertical droit et un montant horizontal central, entre les montants verticaux gauche et droit, le montant horizontal central étant apte à se déplacer au travers de l'ouverture de l'élément de séparation.

La première chambre peut être délimitée par le montant vertical gauche du piston, l'élément de séparation et la paroi de l'enceinte. La deuxième chambre peut être délimitée par le montant vertical gauche du piston et la paroi de l'enceinte. L'enceinte peut comporter une troisième chambre de volume variable, destinée à contenir au moins une partie du premier fluide comprimé, située à l'intérieur de l'enceinte et délimitée par l'élément de séparation, le montant vertical droit du piston et la paroi de l'enceinte. L'enceinte peut comporter une quatrième chambre de volume variable, destinée à contenir au moins une partie du deuxième fluide à comprimer, située à l'intérieur de l'enceinte et délimitée par le montant vertical droit du piston et la paroi de l'enceinte.

En outre, la troisième chambre peut comporter des troisièmes moyens d'admission, formés notamment au travers de la paroi de l'enceinte, d'au moins une partie du premier fluide dans la troisième chambre, et des troisièmes moyens d'évacuation, formés notamment au travers de la paroi de l'enceinte, d'au moins une partie du premier fluide en dehors de la troisième chambre. La quatrième chambre peut comporter des quatrièmes moyens d'admission, formés notamment au travers de la paroi de l'enceinte, d'au moins une partie du deuxième fluide dans la quatrième chambre, et des quatrièmes moyens d'évacuation, formés notamment au travers de la paroi de l'enceinte, d'au moins une partie du deuxième fluide en dehors de la quatrième chambre.

Par ailleurs, l'enceinte peut comporter au moins un joint d'étanchéité entre le piston et la paroi de l'enceinte et/ou au moins un élément de support au contact de la paroi de l'enceinte.

En outre, selon un autre aspect, un ensemble, comporte au moins deux systèmes de compression passive à piston tels que décrits précédemment, montés en série de sorte à former au moins deux étages de compression, au moins une partie du premier fluide circulant au travers desdits au moins deux systèmes de compression et au moins une partie du deuxième fluide circulant au travers desdits au moins deux systèmes de compression.

Par ailleurs, l'invention a aussi pour objet, selon un autre de ses aspects, un procédé de mise en compression

d'un deuxième fluide par la détente d'un premier fluide comprimé, caractérisé en ce qu'il est mis en oeuvre par le biais d'un système de compression passive à piston tel que défini précédemment, et en ce qu'il comporte les étapes suivantes :

- détente du premier fluide contenu dans la première chambre, notamment par introduction dudit premier fluide dans la première chambre,
- déplacement passif en translation selon l'axe de translation du piston de sorte à augmenter le volume de la première chambre et à diminuer le volume de la deuxième chambre,
- compression du deuxième fluide contenu dans la deuxième chambre.

Le procédé peut avantageusement être mis en oeuvre pour la compression d'un deuxième gaz sous la forme du dioxyde de carbone ($CO_2$) par la détente d'un premier gaz comprimé sous la forme de dihydrogène ($H_2$), et peut comporter l'étape de fabrication de méthane par réaction de méthanation entre le dioxyde de carbone et le dihydrogène.

**BRÈVE DESCRIPTION DES DESSINS**

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :

La figure 1 illustre, selon une vue partielle en coupe, un premier exemple de système de compression passive à piston conforme à l'invention,

La figure 2 illustre, selon des vues partielles en coupe semblables à celle de [Fig. 1], des étapes (1) à (5) de mise en oeuvre d'un procédé utilisant le premier exemple de système de compression passive à piston conforme à l'invention,

La figure 3 illustre, selon une vue partielle en coupe, un deuxième exemple de système de compression passive à piston conforme à l'invention,

La figure 4 illustre, selon des vues partielles en coupe semblables à celle de [Fig. 3], des étapes (1) à (4) de mise en oeuvre d'un procédé utilisant le deuxième exemple de système de compression passive à piston conforme à l'invention,

La figure 5 illustre, selon une vue partielle en coupe, un exemple d'ensemble comportant trois systèmes de compression passive à piston conformes à l'invention, montés en série,

La figure 6 illustre, sous forme de schéma-bloc, un principe existant de système permettant la réaction de méthanation,

La figure 7 illustre, sous forme de schéma-bloc, un principe conforme à l'invention de système permettant la réaction de méthanation, et

La figure 8 illustre, sous forme graphique, une estimation d'économie d'électricité obtenue par le système illustré sur la figure 7

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

**EXPOSÉ DÉTAILLÉ DE MODES DE RÉALISATION PARTICULIERS**

On a tout illustré sur la figure 1, selon une vue partielle en coupe, un premier exemple de système de compression passive 1 à piston 2 conforme à l'invention. Ce système de compression 1 permet de comprimer un deuxième gaz 2 par la détente d'un premier gaz 3 comprimé.

Le système de compression 1 comporte ainsi une enceinte fermée E de forme cylindrique dont le volume intérieur est délimité par une paroi P comprenant une surface intérieure Pi et une surface extérieure Pe.

Un piston 2 est positionné à l'intérieur de l'enceinte E. Ce piston 2 est mobile en translation selon un axe de translation T qui correspond ici à l'axe vertical de l'enceinte E. Le piston 2 présente, lorsqu'observé en coupe dans un plan contenant l'axe de translation T, ici le plan de la feuille, une forme en « T ».

De plus, l'enceinte E comporte une première chambre 5 cylindrique de volume V1 variable, pour contenir le premier gaz 3 comprimé. La première chambre 5 est située dans la partie supérieure de l'enceinte E, étant délimitée par la surface intérieure Pi de la paroi P et la partie supérieure du piston 2.

Cette première chambre 5 comporte des premiers moyens d'admission 10, ici une première soupape d'admission 10 formée au travers de la paroi P de l'enceinte E, du premier gaz 3 dans la première chambre 5, et des premiers

moyens d'évacuation 11, ici une première soupape d'évacuation 11 formée au travers de la paroi P de l'enceinte E, du premier gaz 3 en dehors de la première chambre 5.

En outre, l'enceinte E comporte une deuxième chambre 6 cylindrique de volume V2 variable, pour contenir le deuxième gaz 4 à comprimer. La deuxième chambre 6 est située dans la partie inférieure de l'enceinte E, étant délimitée par la surface intérieure Pi de la paroi P, par le piston 2 et par les faces latérales de deux éléments de support 16 positionnés dans l'enceinte E contre la surface intérieure Pi de la paroi P. Les première 5 et deuxième 6 chambres sont ainsi séparées l'une de l'autre par le piston 2.

Cette deuxième chambre 6 comporte des deuxièmes moyens d'admission 12, ici une deuxième soupape d'admission 12 formée au travers de la paroi P de l'enceinte E, du deuxième gaz 4 dans la deuxième chambre 6, et des deuxièmes moyens d'évacuation 13, ici une deuxième soupape d'évacuation 13 formée au travers de la paroi P de l'enceinte E, du deuxième gaz 4 en dehors de la deuxième chambre 6.

Le piston 2 permet de faire varier la pression du premier gaz 3 dans la première chambre 5 et la pression du deuxième gaz 4 dans la deuxième chambre 6 par déplacement en translation selon l'axe de translation T et permet également de faire les volumes V1 et V2.

Par ailleurs, dans cet exemple de la figure 1, la section S1 de la première chambre 5, mesurée perpendiculairement à l'axe de translation T, est différente de la section S2 de la deuxième chambre 6, mesurée perpendiculairement à l'axe de translation T. En particulier, la section S2 de la deuxième chambre 6 est définie par l'écart entre les deux éléments de support 16.

De plus, un joint d'étanchéité 18a est prévu entre la partie supérieure du piston 2, délimitant en partie la première chambre 5, et la surface intérieure Pi de la paroi P. De même, un joint d'étanchéité 18b est prévu entre la partie inférieure du piston 2, délimitant en partie la deuxième chambre 6, et la surface intérieure Pi de la paroi P de l'enceinte E.

En outre, deux organes de rappel élastique 15, ici des ressorts, sont positionnés entre le piston 2 et les éléments de support 16. Ces deux ressorts 15 sont configurés pour être comprimés par le piston 2 en cas de déplacement en translation du piston 2 vers la deuxième chambre 6 et configurés pour être détendus en cas de déplacement en translation du piston 2 vers la première chambre 5.

Chaque ressort 15 est plus particulièrement en appui contre le piston 2 à une première extrémité 15a et en appui contre un élément de support 16 à une deuxième extrémité 15b.

La première chambre 5 contient avantageusement un premier gaz 3 à haute pression P1 dit « moteur », et la deuxième chambre 6 contient avantageusement un deuxième gaz 4 à basse pression P2 à comprimer. La détente du premier gaz 3 dans la première chambre 3 d'une pression P1 à une pression P'1, inférieure à P1, génère un travail W. Ce travail W va être utilisé pour comprimer passivement le deuxième gaz 4 dans la deuxième chambre 6 d'une pression P2 à une pression P2', supérieure à P2, sans avoir besoin d'une force externe ou d'une alimentation électrique. Le retour du piston 2 vers le haut est alors assuré par les ressorts élastiques 15.

Le principe de fonctionnement de ce premier système de compression 1 est illustré par la figure 2.

Il est à noter que la force F exercée sur chaque ressort 15 est calculée par la loi de Hooke, à savoir que :

$$F = k \cdot (L_0 - x),$$

où :

k est la raideur du ressort,
La est la longueur initiale du ressort, et
X est la position du ressort à l'instant donné t.

Par ailleurs, pendant la phase de charge ou de décharge, les pressions P1 et P2 dans les deux chambres 5, 6 varient, ce qui entraîne un mouvement du piston 2 vers le haut ou vers le bas.

Ainsi, à un instant donné t, le piston 2 descend vers le bas lorsque $P1 \cdot S1 \geq P2 \cdot S2 + F$. En revanche, le piston 2 monte vers le haut lorsque $P1 \cdot S1 < P2 \cdot S2 + F$.

Nous allons maintenant décrire un cycle de fonctionnement du système de compression 1 à l'aide des étapes (1) à (5) illustrées sur la figure 2.

Etape (1) : à l'instant initial, $t = t_{ini}$, le piston 2 est initialement en haut. Le volume V1 de la première chambre 5 est quasiment nul (on parle de « volume mort ») et la pression initiale de la première chambre 5 est P1,min. La deuxième chambre 6 comporte un volume V2 de deuxième gaz 4 à une pression initiale P2,min. Toutes les soupapes 10, 11, 12 et 13 sont fermées. Les ressorts 15 sont dans leur position initiale avec une longueur maximale $x_{max}$.

Etape (2) : à l'instant t, l'admission du premier gaz 3 à la pression P1, par le biais de l'ouverture de la soupape 10, dans la première chambre 5 provoque l'abaissement du piston 2. Cela induit la compression des ressorts 15 à une longueur x et la compression du deuxième gaz 4 contenu dans la deuxième chambre 6 dans laquelle la pression

augmente jusqu'à P2 strictement supérieure à P2, min.

Etape (3) : à l'instant de la moitié du cycle t = $t_{1/2\ cycle}$, le piston 2 est dans sa position basse et le volume V2 de la deuxième chambre 6 est quasiment nul. Le volume V1 de la première chambre 5 est à son maximum. La soupape 10 est fermée. Alors, la pression P2, max dans la deuxième chambre 6 est maximale. Les ressorts 15 sont comprimés au maximum à leur longueur minimale $x_{min}$. La poursuite de la course du piston 2 permet d'évacuer le deuxième gaz 4 vers l'extérieur à la pression P2, max par l'ouverture de la soupape 13.

Etape (4) : A l'instant t', le premier gaz 3 est évacué à la pression P'1 au travers de la soupape 11 sous l'action des ressorts 15 de longueur x'. Dans le même temps, du deuxième gaz 4 est admis dans la deuxième chambre 6 à la pression P2, min par le biais de la soupape 12.

Etape (5) : A l'instant t = $t_{final}$, une fois le premier gaz 3 totalement déchargé de la première chambre 5, la pression revient à P1, min et la deuxième chambre 6 est remplie par un deuxième gaz 4 à la pression P2, min.

Dans le système de compression 1 de l'exemple de la figure 1, les ressorts 15 assurent le mouvement de retour du piston 2 entre les première 5 et deuxième 6 chambres de compression. Afin de remplacer les ressorts 15, il est aussi possible de coupler un autre système de compression du piston au premier.

Ainsi, on a illustré sur la figure 3, selon une vue partielle en coupe, un deuxième exemple de système de compression passive 1 à piston 2 conforme à l'invention. Tout comme pour le premier exemple, ce système de compression 1 permet de comprimer un deuxième gaz 2 par la détente d'un premier gaz 3 comprimé.

Le système de compression 1 comporte une enceinte fermée E de forme cylindrique dont le volume intérieur est délimité par une paroi P comprenant une surface intérieure Pi et une surface extérieure Pe.

Un piston 2 est positionné à l'intérieur de l'enceinte E. Ce piston 2 est mobile en translation selon un axe de translation T qui correspond ici à l'axe horizontal de l'enceinte E. Le piston 2 présente, lorsqu'observé en coupe dans un plan contenant l'axe de translation T, ici le plan de la feuille, une forme en « H », comportant un montant vertical gauche Hg, un montant vertical droit Hd et un montant horizontal central Hc, entre les montants verticaux gauche Hg et droit Hd.

Par ailleurs, l'enceinte E comporte un élément de séparation 17, fixé à l'intérieur de l'enceinte E et formant une portion gauche Pg de l'enceinte E et une portion droite Pd de l'enceinte E. Cet élément de séparation 17 comprend une ouverture 18 au travers de laquelle est apte à se déplacer le piston 2 en translation selon l'axe de translation T, et plus précisément le montant horizontal central Hc du piston 2.

La première chambre 5, de volume Vg1 variable, est délimitée par le montant vertical gauche Hg du piston 2, l'élément de séparation 17 et la surface intérieure Pi de la paroi P de l'enceinte E.

La deuxième chambre 6, de volume Vg2 variable, est délimitée par le montant vertical gauche Hg du piston 2 et la surface intérieure Pi de la paroi P de l'enceinte E.

La première chambre 5 comporte des premiers moyens d'admission 10, ici une première soupape d'admission 10 formée au travers de la paroi P de l'enceinte E, du premier gaz 3 dans la première chambre 5, et des premiers moyens d'évacuation 11, ici une première soupape d'évacuation 11 formée au travers de la paroi P de l'enceinte E, du premier gaz 3 en dehors de la première chambre 5.

La deuxième chambre 6 comporte des deuxièmes moyens d'admission 12, ici une deuxième soupape d'admission 12 formée au travers de la paroi P de l'enceinte E, du deuxième gaz 4 dans la deuxième chambre 6, et des deuxièmes moyens d'évacuation 13, ici une deuxième soupape d'évacuation 13 formée au travers de la paroi P de l'enceinte E, du deuxième gaz 4 en dehors de la deuxième chambre 6.

Les première 5 et deuxième 6 chambres sont séparées l'une de l'autre par le piston 2.

Le piston 2 permet de faire varier la pression du premier gaz 3 dans la première chambre 5 et la pression du deuxième gaz 4 dans la deuxième chambre 6 par déplacement en translation selon l'axe de translation T et permet également de faire les volumes Vg1 et Vg2.

De plus, dans cet exemple de la figure 2, la section 51 de la première chambre 5, mesurée perpendiculairement à l'axe de translation T, est identique à la section S2 de la deuxième chambre 6, mesurée perpendiculairement à l'axe de translation T.

Par ailleurs, dans cet exemple, l'enceinte E comporte une troisième chambre 8 de volume Vd1 variable, destinée à contenir du premier gaz 3 comprimé, délimitée par l'élément de séparation 17, le montant vertical droit Hd du piston 2 et la surface intérieure Pi de la paroi P de l'enceinte E. L'enceinte E comporte également une quatrième chambre 9 de volume Vd2 variable, destinée à contenir du deuxième gaz 4 à comprimer, délimitée par le montant vertical droit Hd du piston 2 et la surface intérieure Pi de la paroi P de l'enceinte E.

La troisième chambre 8 comporte des troisièmes moyens d'admission 20, ici une troisième soupape d'admission 20 formée au travers de la paroi P de l'enceinte E, du premier gaz 3 dans la troisième chambre 8, et des troisièmes moyens d'évacuation 21, ici une troisième soupape d'évacuation 21 formée au travers de la paroi P de l'enceinte E, du premier gaz 3 en dehors de la troisième chambre 8. De même, la quatrième chambre 9 comporte des quatrièmes moyens d'admission 22, ici une quatrième soupape d'admission 22 formée au travers de la paroi P de l'enceinte E, du deuxième gaz 4 dans la quatrième chambre 9, et des quatrièmes moyens d'évacuation 23, ici une quatrième soupape 23 formée

au travers de la paroi P de l'enceinte E, du deuxième gaz 4 en dehors de la quatrième chambre 9.

Ainsi, le système de compression 1 de la figure 3 comporte quatre chambres 5, 6, 8 et 9 de compression. Les deux chambres 4 et 9 aux deux extrémités de l'enceinte E contiennent du deuxième gaz 4 qui doit être comprimé, et les deux chambres 5 et 6 du milieu contiennent du premier gaz 3, « moteur », qui doit être détendu. L'élément de séparation 17, formant la frontière entre les chambres 5 et 8, est fixe.

Le principe de fonctionnement de ce deuxième système de compression 1 est illustré par la figure 4.

Il est analogue à celui précédemment décrit pour le premier exemple, à l'exception d'un déphasage d'un demi-cycle. Dans la suite, seul un demi-cycle sera décrit, l'autre demi-cycle se déduisant par symétrie, droite et gauche étant inversées.

Etape (1) : Initialement, le piston 2 est à droite. Les volumes Vg1 et Vd2 respectivement des chambres 5 et 9 sont quasiment nuls et de pressions respectives P'1 et P'2. Les pressions dans les chambres 4 et 8 sont respectivement P2 et P1.

Etape (2) : La chambre 8 est dépressurisée par ouverture de la soupape 21, et le premier gaz 3 est évacué à la pression P'1, strictement inférieure à P1. Simultanément, la chambre 5 admet le premier gaz 3 à la pression P1 par le biais de la soupape 10, ce qui déplace le piston 2 vers la gauche selon la flèche D. La pression augmente dans la chambre 4 jusqu'à atteindre une pression P'2 et elle diminue dans la chambre 9 jusqu'à atteindre une pression P2.

Etape (3) : Le procédé se poursuit par l'évacuation du deuxième gaz 4 depuis la chambre 4 par le biais de la soupape 13, et par l'admission du deuxième gaz 4 à la pression P2 dans la chambre 9 par le biais de la soupape 22. Le piston poursuit alors sa course vers la gauche.

Etape (4) : En bout de course, une position symétrique par rapport à l'étape (1) est obtenue. La chambre 4 contient un deuxième gaz 4 à une pression P'2, la chambre 5 contient un premier gaz 3 à une pression P1, la chambre 8 contient un premier gaz 3 à une pression P'1 et la chambre 9 contient un deuxième gaz 4 à une pression P2.

Dans ce deuxième exemple de système de compression 1 conforme à l'invention, l'équilibre des forces s'écrit : $P1 \cdot S1 + P2 \cdot S2 = P'1 \cdot S1 + P'2 \cdot S2$, où les sections S1 et S2 sont respectivement les sections des chambres 5 et 6 identifiées précédemment et correspondent également aux sections de surface du piston 2, et précisément du montant vertical gauche Hg.

Le rapport des sections est alors défini par le paramètre Rs tel que Rs = S1/S2. De plus, les rapports des pressions d'entrée et de sortie des deux gaz 3 et 4 sont respectivement définis par les paramètres $R_3$ et $R_4$ tels que $R_3 = P'1/P1$ et $R_4 = P'2/P2$.

Par ailleurs, le rapport de débit molaire est défini par le paramètre Rn tel que $Rn = (P1 \cdot S1)/(P2 \cdot S2)$.

Avec une hypothèse de compression isotherme et sans perte de charge due aux transfert de gaz, on obtient alors les relations suivantes :

$$Rn = Rs \cdot (P1/P2),$$

$$R_4 = 1 + Rn \cdot (1 - R_3).$$

Ces deux équations permettent de calculer les pressions de sortie des deux gaz 3 et 4 en fonction des pressions d'entrée avec une géométrie donnée, représentée par le rapport des sections Rs. D'autre part, il est aussi possible de varier ce rapport des sections pour atteindre des rapports de pression souhaités.

Par ailleurs, la figure 5 illustre, selon une vue partielle en coupe, un exemple d'ensemble 30 comportant trois systèmes de compression passive 1a, 1b, 1c à piston 2a, 2b, 2c conformes à l'invention, qui sont montés en série de sorte à former trois étages de compression E1, E2, E3.

En effet, il est possible d'utiliser plusieurs systèmes de compression 1a, 1b, 1c en série afin de maximiser le rendement de l'ensemble 30. Il est plus efficace de réaliser une compression avec un faible rapport de compression à chaque étage.

Ainsi, sur la figure 5, les flèches G1 représentent les admissions ou évacuations du premier gaz 3 et les flèches G2 représentent les admissions ou évacuations du deuxième gaz 4.

En particulier, la chambre 8 du premier étage E1 reçoit une admission de premier gaz 3 à une pression P1 et la chambre 9 du premier étage E1 évacue du deuxième gaz 4 à une pression P'2. En outre, la chambre 5 du troisième étage E3 évacue du premier gaz 3 à une pression P1 et la chambre 6 du troisième étage E3 reçoit du deuxième gaz 4 à une pression P2.

Avantageusement, la circulation des premier 3 et deuxième 4 gaz est croisée afin de maximiser les écarts de pression entre gaz moteur (premier gaz 3) et gaz à comprimer (deuxième gaz 4).

Le procédé de mise en compression du deuxième gaz 4 par la détente du premier gaz 3 comprimé peut être mis en oeuvre par le biais d'un système quelconque de compression 1 conforme à l'invention, tel que celui illustré sur

la figure 1 ou celui illustré sur la figure 2, voire également ceux illustrés sur la figure 5. Il peut en outre être utilisé pour de nombreuses applications dans lesquelles un gaz a besoin d'être comprimé.

A titre d'exemple, la figure 6 illustre, sous forme de schéma-bloc, un principe existant de système permettant la réaction de méthanation, et la figure 7 illustre, sous forme de schéma-bloc, un principe conforme à l'invention de système permettant la réaction de méthanation.

Ainsi, le deuxième gaz 4 peut être sous la forme de dioxyde de carbone ($CO_2$), le premier gaz 3 peut être sous la forme de dihydrogène ($H_2$) comprimé, et la fabrication de méthane ($CH_4$) peut être obtenue par réaction de méthanation entre le dioxyde de carbone ($CO_2$) et le dihydrogène ($H_2$).

La conversion d'électricité en gaz, connue sous l'appellation « Power-to-Gas » ou PtG en anglais, a fait l'objet de nombreuses discussions ces dernières années. Elle permet de convertir l'énergie de l'électricité en énergie de liaison chimique, stockée dans un gaz combustible.

Par ailleurs, la réaction de méthanation, bien connue par la réaction de Sabatier, entre l'hydrogène et le dioxyde de carbone capté dans l'atmosphère produit du méthane synthétique et de l'eau selon l'équation suivante :

$$CO_2 + 4 \cdot H_2 \leftrightarrow CH_4 + 2 \cdot H_2O$$

Il est à noter que la pression du gaz entrant dans le réacteur de méthanation se situe classiquement à une dizaine de bar, c'est-à-dire que le dioxyde de carbone et le dihydrogène en entrée de méthanation doivent être comprimés.

D'un côté, le dioxyde de carbone est souvent disponible à faible pression, typiquement la pression atmosphérique, car il est issu classiquement d'une séparation membranaire, ou d'une séparation par adsorption, ou encore d'un captage par des amines. Il est nécessaire de comprimer ce gaz, ce qui peut être coûteux en énergie si un compresseur électrique est utilisé.

De l'autre côté, l'hydrogène peut être issu d'une électrolyse classiquement réalisée à plusieurs dizaines de bar, typiquement 30 bar. Or, la dépressurisation de l'hydrogène à la pression de la méthanation plus basse libère une quantité importante de travail qui pourrait être utilisée pour comprimer le dioxyde de carbone à la pression d'entrée requise pour la méthanation. Le système de compression passive 1 conforme à l'invention permet donc d'utiliser le travail libéré par la dépressurisation d'hydrogène de haute pression à la sortie d'électrolyseurs pour comprimer sans frais le dioxyde de carbone avant qu'il ne rentre dans le réacteur pour la production de méthane synthétique.

Ainsi, un tel exemple d'utilisation du principe de l'invention pour la réaction de méthanation est illustré sur les figures 6 et 7. Dans le cas du système classique selon la figure 6 et dans le cas du système basé sur le principe de l'invention de la figure 7, un surplus d'électricité 40 est utilisé dans un ou plusieurs électrolyseurs 41 pour produire du premier gaz 3 sous forme de dihydrogène $H_2$ à une pression élevée de 30 bar, repéré par 3/30 bar sur les figures 6 et 7.

Par ailleurs, du deuxième gaz 4 sous forme de dioxyde de carbone $CO_2$ est disponible à une pression basse de 1 bar, repéré par 4/1 bar sur les figures 6 et 7.

Pour pouvoir mettre en oeuvre la réaction de méthanation dans le réacteur 42 et obtenir le méthane, repéré par 43 sur les figures 6 et 7, il est nécessaire de disposer en entrée du réacteur 42 de $CO_2$ à une pression de 5 bar et de $H_2$ à une pression de 5 bar, respectivement repérés par 3/5 bar et 4/5 bar sur les figures 6 et 7. Autrement dit, la pression du premier gaz 3 sous forme de $H_2$ doit baisser tandis que la pression du deuxième gaz 4 sous forme de $CO_2$ doit augmenter.

Selon le système classique de la figure 6, le premier gaz 3 à 30 bar passe par une turbine afin d'obtenir du premier gaz 3 à 5 bar. Le travail effectué par la turbine, repéré par 45 sur la figure 6, est utilisé pour comprimer le deuxième gaz 4 de la pression atmosphérique 1 bar à la pression souhaitée de 5 bar par le biais d'un compresseur, repéré par 46 sur la figure 6. Au cours de ce processus, une source électrique est nécessaire pour le compresseur 46.

Au contraire, dans le système reposant sur le principe de l'invention proposé sur la figure 7, le premier gaz 3 à 30 bar et le deuxième gaz 4 à 1 bar sont utilisés dans un système de compression passive 1 à piston comme décrit précédemment, ce qui permet alors d'obtenir en sortie le premier gaz 3 à 5 bar et le deuxième gaz 4 à 5 bar. En effet, le $CO_2$ est alors comprimé selon le principe de l'invention sans avoir besoin d'utiliser une source électrique ou une force extérieure.

Il est alors possible d'estimer le pourcentage d'économie électrique obtenu grâce à l'utilisation du système de compression passive 1 conforme à l'invention (figure 7) par rapport à l'utilisation d'une turbine et d'un compresseur avec source d'électricité (figure 6).

Ainsi, en supposant que 10 TWh par an, soit plus précisément $1{,}14^{e}6$ kW, d'électricité renouvelable est disponible pour la production de dihydrogène par le ou les électrolyseurs et 225 kWe est nécessaire pour produire 100 kg de dihydrogène par jour, le débit massique de dihydrogène produit est calculé par la formule suivante :

$$\dot{m}_{H2,produit} = \frac{100\frac{kg}{jour} * 1.14e6}{225}$$

Le débit molaire de dihydrogène est alors :

$$\dot{n}_{H2,produit} = \frac{\dot{m}_{H2,produit}}{M_{H2}}$$

où $M_{H2}$ est la masse molaire d'$H_2$.

Alors, le débit molaire du $CO_2$ pour la réaction de Sabatier est :

$$\dot{n}_{CO2\grave{a}comprimer} = \frac{\dot{n}_{H2,produit}}{4}$$

L'énergie nécessaire pour la compression du $CO_2$ est donnée par la relation suivante :

$$P_{compression} = m_{CO2}W_{compression} = n_{CO2}M_{CO2}W_{compression}$$

où $W_{compression}$ est le travail consumé par un compresseur calculé par la formule suivante :

$$W_{compression} = \frac{kRT_{in,CO2}}{k-1}\left[\left(\frac{P_{dis}}{P_{suc}}\right)^{\left(\frac{k-1}{k}\right)} - 1\right]$$

où :

k est le facteur polytropique du $CO_2$ (k =1,28),
$M_{CO2}$ est la masse molaire du $CO_2$ ($M_{CO2}$ = 48 g/mol),
R est la constante universelle des gaz parfaits (R = 8,314 $J.mol^{-1}.K^{-1}$),
$T_{in,\ CO2}$ est la température d'entrée du $CO_2$,
$P_{suc}$ est la pression d'entrée du $CO_2$, et
$P_{dis}$ est la pression de sortie du $CO_2$.

Dans le cas du $CO_2$, k = 1,28, $M_{CO2}$ = 48 g/mol et R = 8,314 J/K/mol.

En supposant que la température d'entrée du $CO_2$ est de 20°C (soit 293 K) et que le rendement du compresseur est d'environ 60 %, l'économie d'électricité augmente avec l'augmentation de la pression d'entrée du $CO_2$ dans le réacteur.

La figure 8 représente l'économie d'électricité obtenue Eco, exprimée en pourcentages (%), en fonction de la pression du $CO_2$ $P_{CO2}$ à la sortie du compresseur, exprimée en bar.

Ainsi, pour comprimer le $CO_2$ de 1 bar à 5 bar, 0,5 % d'économie d'électricité est gagné par le système de compression passive 1 conforme à l'invention par rapport à un compresseur classique.

Bien entendu, l'invention n'est pas limitée aux exemples de réalisation qui viennent d'être décrits. Diverses modifications peuvent y être apportées par l'homme du métier.

## Revendications

1. Procédé de mise en compression d'un deuxième fluide (4) par la détente d'un premier fluide (3) comprimé, **caractérisé en ce qu'**il est mis en oeuvre par le biais d'un système de compression passive (1) à piston (2), comportant au moins :

   - une enceinte fermée (E), délimitée par une paroi (P),

- un piston (2), situé à l'intérieur de l'enceinte (E) et mobile en translation selon un axe de translation (T) à la suite de la détente du premier fluide (3) comprimé,
- une première chambre (5) de volume variable, destinée à contenir au moins une partie du premier fluide (3) comprimé, située à l'intérieur de l'enceinte (E) et délimitée en partie par le piston (2),
- une deuxième chambre (6) de volume variable, destinée à contenir au moins une partie du deuxième fluide (4) à comprimer, située à l'intérieur de l'enceinte (E) et délimitée en partie par le piston (2),

les première (5) et deuxième (6) chambres étant séparées l'une de l'autre par au moins le piston (2),
la première chambre (5) comportant des premiers moyens d'admission (10) d'au moins une partie du premier fluide (3) dans la première chambre (5), et des premiers moyens d'évacuation (11) d'au moins une partie du premier fluide (3) en dehors de la première chambre (5),
la deuxième chambre (6) comportant des deuxièmes moyens d'admission (12) d'au moins une partie du deuxième fluide (4) dans la deuxième chambre (6), et des deuxièmes moyens d'évacuation (13) d'au moins une partie du deuxième fluide (4) en dehors de la deuxième chambre (6),
le piston (2) étant configuré pour faire varier la pression du premier fluide (3) dans la première chambre (5) et la pression du deuxième fluide (4) dans la deuxième chambre (6) par déplacement en translation selon l'axe de translation (T),
l'enceinte (E) comportant un élément de séparation (17), fixé à l'intérieur de l'enceinte (E) et formant une portion gauche (Pg) de l'enceinte (E) et une portion droite (Pd) de l'enceinte (E), ledit élément de séparation (17) comprenant une ouverture (18) au travers de laquelle est apte à se déplacer le piston (2) en translation selon l'axe de translation (T), ledit élément de séparation (17) délimitant en partie la première chambre (5),
le piston (2) présentant, lorsqu'observé en coupe dans un plan contenant l'axe de translation (T), une forme en « H », comportant un montant vertical gauche (Hg), un montant vertical droit (Hd) et un montant horizontal central (Hc), entre les montants verticaux gauche (Hg) et droit (Hd), le montant horizontal central (Hc) étant apte à se déplacer au travers de l'ouverture (18) de l'élément de séparation (17),
la première chambre (5) étant délimitée par le montant vertical gauche (Hg) du piston (2), l'élément de séparation (17) et la paroi (P) de l'enceinte (E), la deuxième chambre (6) étant délimitée par le montant vertical gauche (Hg) du piston (2) et la paroi (P) de l'enceinte (E),
l'enceinte (E) comportant une troisième chambre (8) de volume variable, destinée à contenir au moins une partie du premier fluide (3) comprimé, située à l'intérieur de l'enceinte (E) et délimitée par l'élément de séparation (17), le montant vertical droit (Hd) du piston (2) et la paroi (P) de l'enceinte (E),
l'enceinte (E) comportant une quatrième chambre (9) de volume variable, destinée à contenir au moins une partie du deuxième fluide (4) à comprimer, située à l'intérieur de l'enceinte (E) et délimitée par le montant vertical droit (Hd) du piston (2) et la paroi (P) de l'enceinte (E),
la troisième chambre (8) comportant des troisièmes moyens d'admission (20) d'au moins une partie du premier fluide (3) dans la troisième chambre (8), et des troisièmes moyens d'évacuation (21) d'au moins une partie du premier fluide (3) en dehors de la troisième chambre (8), et **en ce que** la quatrième chambre (9) comporte des quatrièmes moyens d'admission (22) d'au moins une partie du deuxième fluide (4) dans la quatrième chambre (9), et des quatrièmes moyens d'évacuation (23) d'au moins une partie du deuxième fluide (4) en dehors de la quatrième chambre (9),
et **en ce que** le procédé comporte les étapes suivantes :

- détente du premier fluide (3) contenu dans la première chambre (5), notamment par introduction dudit premier fluide (3) dans la première chambre (5),
- déplacement passif en translation selon l'axe de translation (T) du piston (2) de sorte à augmenter le volume de la première chambre (5) et à diminuer le volume de la deuxième chambre (6),

- compression du deuxième fluide (4) contenu dans la deuxième chambre (6),

le procédé étant mis en oeuvre pour la compression d'un deuxième gaz (4) sous la forme du dioxyde de carbone ($CO_2$) par la détente d'un premier gaz (3) comprimé sous la forme de dihydrogène ($H_2$), et comportant l'étape de fabrication de méthane ($CH_4$) par réaction de méthanation entre le dioxyde de carbone ($CO_2$) et le dihydrogène ($H_2$).

2. Procédé selon la revendication 1, **caractérisé en ce que** les premiers moyens d'admission (10), les premiers moyens d'évacuation (11), les deuxièmes moyens d'admission (12) et/ou les deuxièmes moyens d'évacuation (13) comportent une soupape.

3. Procédé selon la revendication 1 ou 2, **caractérisé en ce que** la section (S1) de la première chambre (5), mesurée perpendiculairement à l'axe de translation (T), est différente de la section (S2) de la deuxième chambre (6), mesurée

perpendiculairement à l'axe de translation (T).

4. Procédé selon la revendication 1 ou 2, **caractérisé en ce que** la section (S1) de la première chambre (5), mesurée perpendiculairement à l'axe de translation (T), est identique à la section (S2) de la deuxième chambre (6), mesurée perpendiculairement à l'axe de translation (T).

5. Procédé selon l'une quelconque des revendications précédentes, **caractérisé en ce que** l'enceinte (E) comporte au moins un joint d'étanchéité (18a, 18b) entre le piston (2) et la paroi (P) de l'enceinte (E) et/ou au moins un élément de support (16) au contact de la paroi (P) de l'enceinte (E).

6. Procédé selon l'une quelconque des revendications précédentes, **caractérisé en ce qu'**il est mis en oeuvre par le biais d'un ensemble (30) comportant au moins deux systèmes de compression passive (1a, 1b, 1c), montés en série de sorte à former au moins deux étages de compression (E1, E2, E3), au moins une partie du premier fluide (3) circulant au travers desdits au moins deux systèmes de compression (1a, 1b, 1c) et au moins une partie du deuxième fluide (4) circulant au travers desdits au moins deux systèmes de compression (1a, 1b, 1c).

## Patentansprüche

1. Verfahren zum Komprimieren eines zweiten Fluids (4) durch das Entspannen eines ersten komprimierten Fluids (3), **dadurch gekennzeichnet, dass** es durch Einsatz eines passiven Kompressionssystems (1) mit Kolben (2) durchgeführt wird, das mindestens Folgendes umfasst:

   - ein geschlossenes Gehäuse (E), das durch eine Wand (P) begrenzt ist,
   - einen Kolben (2), der sich im Inneren des Gehäuses (E) befindet und entlang einer Translationsachse (T) im Anschluss an das Entspannen des ersten komprimierten Fluids (3) translatorisch beweglich ist,
   - eine erste Kammer (5) mit variablem Volumen, die dazu bestimmt ist, mindestens einen Teil des ersten komprimierten Fluids (3) zu enthalten, die sich im Inneren des Gehäuses (E) befindet und teilweise durch den Kolben (2) begrenzt ist,
   - eine zweite Kammer (6) mit variablem Volumen, die dazu bestimmt ist, mindestens einen Teil des zu komprimierenden zweiten Fluids (4) zu enthalten, die sich im Inneren des Gehäuses (E) befindet und teilweise durch den Kolben (2) begrenzt ist,

   wobei die erste (5) und die zweite (6) Kammer mindestens durch den Kolben (2) voneinander getrennt sind,
   wobei die erste Kammer (5) ein erstes Einlassmittel (10) für mindestens einen Teil des ersten Fluids (3) in die erste Kammer (5) und ein erstes Abflussmittel (11) für mindestens einen Teil des ersten Fluids (3) aus der ersten Kammer (5) heraus umfasst,
   wobei die zweite Kammer (6) ein zweites Einlassmittel (12) für mindestens einen Teil des zweiten Fluids (4) in die zweite Kammer (6) und ein zweites Abflussmittel (13) für mindestens einen Teil des zweiten Fluids (4) aus der zweiten Kammer (6) heraus umfasst,
   wobei der Kolben (2) dazu konfiguriert ist, den Druck des ersten Fluids (3) in der ersten Kammer (5) und den Druck des zweiten Fluids (4) in der zweiten Kammer (6) durch Translationsbewegung entlang der Translationsachse (T) zu verändern,
   wobei das Gehäuse (E) ein Trennelement (17) umfasst, das im Inneren des Gehäuses (E) befestigt ist und einen linken Abschnitt (Pg) des Gehäuses (E) und einen rechten Abschnitt (Pd) des Gehäuses (E) bildet, wobei das Trennelement (17) eine Öffnung (18) umfasst, durch die sich der Kolben (2) translatorisch entlang der Translationsachse (T) bewegen kann, wobei das Trennelement (17) teilweise die erste Kammer (5) begrenzt,
   wobei der Kolben (2) bei Betrachtung im Schnitt in einer Ebene, die die Translationsachse (T) enthält, eine "H"-Form aufweist, die einen linken vertikalen Schenkel (Hg), einen rechten vertikalen Schenkel (Hd) und einen mittleren horizontalen Schenkel (Hc), zwischen dem linken (Hg) und dem rechten vertikalen Schenkel (Hd), umfasst, wobei sich der mittlere horizontale Schenkel (Hc) durch die Öffnung (18) des Trennelements (17) bewegen kann,
   wobei die erste Kammer (5) durch den linken vertikalen Schenkel (Hg) des Kolbens (2), das Trennelement (17) und die Wand (P) des Gehäuses (E) begrenzt ist, während die zweite Kammer (6) durch den linken vertikalen Schenkel (Hg) des Kolbens (2) und die Wand (P) des Gehäuses (E) begrenzt ist,
   wobei das Gehäuse (E) eine dritte Kammer (8) mit variablem Volumen umfasst, die dazu bestimmt ist, mindestens einen Teil des ersten komprimierten Fluids (3) zu enthalten, die sich im Inneren des Gehäuses

(E) befindet und durch das Trennelement (17), den rechten vertikalen Schenkel (Hd) des Kolbens (2) und die Wand (P) des Gehäuses (E) begrenzt ist,
wobei das Gehäuse (E) eine vierte Kammer (9) mit variablem Volumen umfasst, die dazu bestimmt ist, mindestens einen Teil des zweiten zu komprimierenden Fluids (4) zu enthalten, die sich im Inneren des Gehäuses (E) befindet und durch den rechten vertikalen Schenkel (Hd) des Kolbens (2) und die Wand (P) des Gehäuses (E) begrenzt ist,
wobei die dritte Kammer (8) ein drittes Einlassmittel (20) für mindestens einen Teil des ersten Fluids (3) in die dritte Kammer (8) und ein drittes Abflussmittel (21) für mindestens einen Teil des ersten Fluids (3) aus der dritten Kammer (8) heraus umfasst, und dass die vierte Kammer (9) ein viertes Einlassmittel (22) für mindestens einen Teil des zweiten Fluids (4) in die vierte Kammer (9) und ein viertes Abflussmittel (23) für mindestens einen Teil des zweiten Fluids (4) aus der vierten Kammer (9) heraus umfasst,
und dass das Verfahren die folgenden Schritte umfasst:

- Entspannen des in der ersten Kammer (5) enthaltenen ersten Fluids (3), insbesondere durch Einleiten des ersten Fluids (3) in die erste Kammer (5),
- passives translatorisches Bewegen des Kolbens (2) entlang der Translationsachse (T), um das Volumen der ersten Kammer (5) zu vergrößern und das Volumen der zweiten Kammer (6) zu verringern,
- Komprimieren des in der zweiten Kammer (6) enthaltenen zweiten Fluids (4),

wobei das Verfahren zum Komprimieren eines zweiten Gases (4) in Form von Kohlendioxid ($CO_2$) durch das Entspannen eines ersten komprimierten Gases (3) in Form von Diwasserstoff ($H_2$) durchgeführt wird und den Schritt des Herstellens von Methan ($CH_4$) durch eine Methanisierungsreaktion zwischen Kohlendioxid ($CO_2$) und Diwasserstoff ($H_2$) umfasst.

2. Verfahren nach Anspruch 1, **dadurch gekennzeichnet, dass** das erste Einlassmittel (10), das erste Abflussmittel (11), das zweite Einlassmittel (12) und/oder das zweite Abflussmittel (13) ein Ventil umfassen.

3. Verfahren nach Anspruch 1 oder 2, **dadurch gekennzeichnet, dass** sich der senkrecht zur Translationsachse (T) gemessene Abschnitt (S1) der ersten Kammer (5) vom senkrecht zur Translationsachse (T) gemessenen Abschnitt (S2) der zweiten Kammer (6) unterscheidet.

4. Verfahren nach Anspruch 1 oder 2, **dadurch gekennzeichnet, dass** der senkrecht zur Translationsachse (T) gemessene Abschnitt (S1) der ersten Kammer (5) mit dem senkrecht zur Translationsachse (T) gemessenen Abschnitt (S2) der zweiten Kammer (6) identisch ist.

5. Verfahren nach einem der vorhergehenden Ansprüche, **dadurch gekennzeichnet, dass** das Gehäuse (E) mindestens eine Dichtung (18a, 18b) zwischen dem Kolben (2) und der Wand (P) des Gehäuses (E) und/ oder mindestens ein Stützelement (16) in Kontakt mit der Wand (P) des Gehäuses (E) umfasst.

6. Verfahren nach einem der vorhergehenden Ansprüche, **dadurch gekennzeichnet, dass** es durch Einsatz einer Anordnung (30) durchgeführt wird, die mindestens zwei passive Kompressionssysteme (1a, 1b, 1c) umfasst, die derart in Reihe montiert sind, um mindestens zwei Kompressionsstufen (E1, E2, E3) zu bilden, wobei mindestens ein Teil des ersten Fluids (3) durch die mindestens zwei Kompressionssysteme (1a, 1b, 1c) zirkuliert und mindestens ein Teil des zweiten Fluids (4) durch die mindestens zwei Kompressionssysteme (1a, 1b, 1c) zirkuliert.

## Claims

1. Method for compressing a second fluid (4) by expanding a first compressed fluid (3), **characterised in that** it is implemented by means of a passive compression system (1) with piston (2), including at least:

- one closed enclosure (E), delimited by a wall (P),
- one piston (2), located inside the enclosure (E) and translatably movable along an axis of translation (T) subsequent to the expansion of the first compressed fluid (3),
- one first chamber (5) of variable volume, intended to contain at least part of the first compressed fluid (3), located inside the enclosure (E) and partly delimited by the piston (2),
- one second chamber (6) of variable volume, intended to contain at least part of the second fluid (4) to be compressed, located inside the enclosure (E) and partly delimited by the piston (2),

the first (5) and second (6) chambers being separated from one another by at least the piston (2),
the first chamber (5) including first means for admitting (10) at least part of the first fluid (3) into the first chamber (5), and first means for discharging (11) at least part of the first fluid (3) from the first chamber (5),
the second chamber (6) including second means for admitting (12) at least part of the second fluid (4) into the second chamber (6), and second means for discharging (13) at least part of the second fluid (4) from the second chamber (6),
the piston (2) being configured to vary the pressure of the first fluid (3) in the first chamber (5) and the pressure of the second fluid (4) in the second chamber (6) by translatably moving along the axis of translation (T).
the enclosure (E) including a separation element (17), attached inside the enclosure (E) and forming a left portion (Pg) of the enclosure (E) and a right portion (Pd) of the enclosure (E), said separation element (17) comprising an opening (18) through which the piston (2) is capable of translatably moving along the axis of translation (T), said separation element (17) partly delimiting the first chamber (5),
the piston (2) having, when observed in section in a plane containing the axis of translation (T), an "H" shape, including a left vertical post (Hg), a right vertical post (Hd) and a central horizontal post (Hc), between the left (Hg) and right (Hd) vertical posts, the central horizontal post (Hc) being capable of moving through the opening (18) of the separation element (17),
the first chamber (5) being delimited by the left vertical post (Hg) of the piston (2),
the separation element (17) and the wall (P) of the enclosure (E), the second chamber (6) being delimited by the left vertical post (Hg) of the piston (2) and the wall (P) of the enclosure (E),
the enclosure (E) including a third chamber (8) of variable volume, intended to contain at least part of the first compressed fluid (3), located inside the enclosure (E) and delimited by the separation element (17), the right vertical post (Hd) of the piston (2) and the wall (P) of the enclosure (E),
the enclosure (E) including a fourth chamber (9) of variable volume, intended to contain at least part of the second fluid (4) to be compressed, located inside the enclosure (E) and delimited by the right vertical post (Hd) of the piston (2) and the wall (P) of the enclosure (E),
the third chamber (8) including third means for admitting (20) at least part of the first fluid (3) into the third chamber (8), and third means for discharging (21) at least part of the first fluid (3) from the third chamber (8), and **in that** the fourth chamber (9) includes fourth means for admitting (22) at least part of the second fluid (4) into the fourth chamber (9), and fourth means for discharging (23) at least part of the second fluid (4) from the fourth chamber (9),
and **in that** the method includes the following steps:

- expanding the first fluid (3) contained in the first chamber (5), particularly by introducing said first fluid (3) into the first chamber (5),
- passively translatably moving along the axis of translation (T) the piston so as to increase the volume of the first chamber (5) and reduce the volume of the second chamber (6),
- compressing the second fluid (4) contained in the second chamber (6),

the method being implemented to compress a second gas (4) in the form of carbon dioxide ($CO_2$) by expanding a first compressed gas (3) in the form of dihydrogen ($H_2$), and including the step of producing methane ($CH_4$) by methanation reaction between the carbon dioxide ($CO_2$) and the dihydrogen ($H_2$).

2. Method according to claim 1, **characterised in that** the first admission means (10), the first discharge means (11), the second admission means (12) and/or the second discharge means (13) include a valve.

3. Method according to claim 1 or 2, **characterised in that** the section (S1) of the first chamber (5), measured perpendicular to the axis of translation (T), is different from the section (S2) of the second chamber (6), measured perpendicular to the axis of translation (T).

4. Method according to claim 1 or 2, **characterised in that** the section (S1) of the first chamber (5), measured perpendicular to the axis of translation (T), is identical to the section (S2) of the second chamber (6), measured perpendicular to the axis of translation (T).

5. Method according to any one of the preceding claims, **characterised in that** the enclosure (E) includes at least one seal (18a, 18b) between the piston (2) and the wall (P) of the enclosure (E) and/or at least one support element (16) in contact with the wall (P) of the enclosure (E).

6. Method according to any one of the preceding claims, **characterised in that** it is implemented by means of an assembly (30) including at least two passive compression systems (1a, 1b, 1c), mounted in series so as to form at least two compression stages (E1, E2, E3), at least part of the first fluid (3) circulating through said at least two compression systems (1a, 1b, 1c) and at least part of the second fluid (4) circulating through said at least two compression systems (1a, 1b, 1c).

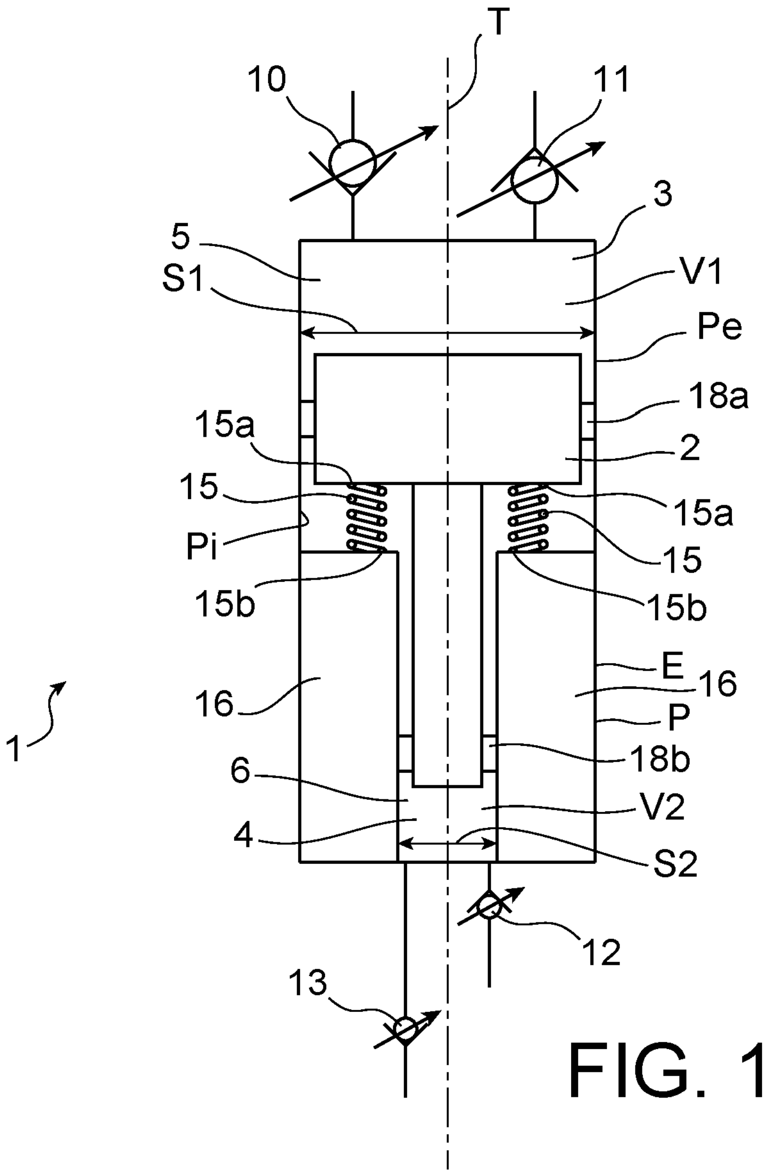
T
10
11
3
5
V1
S1
Pe
18a
15a
2
15
15a
Pi
15
15b
15b
E
16
16
P
1
18b
6
V2
4
S2
12
13

FIG. 1

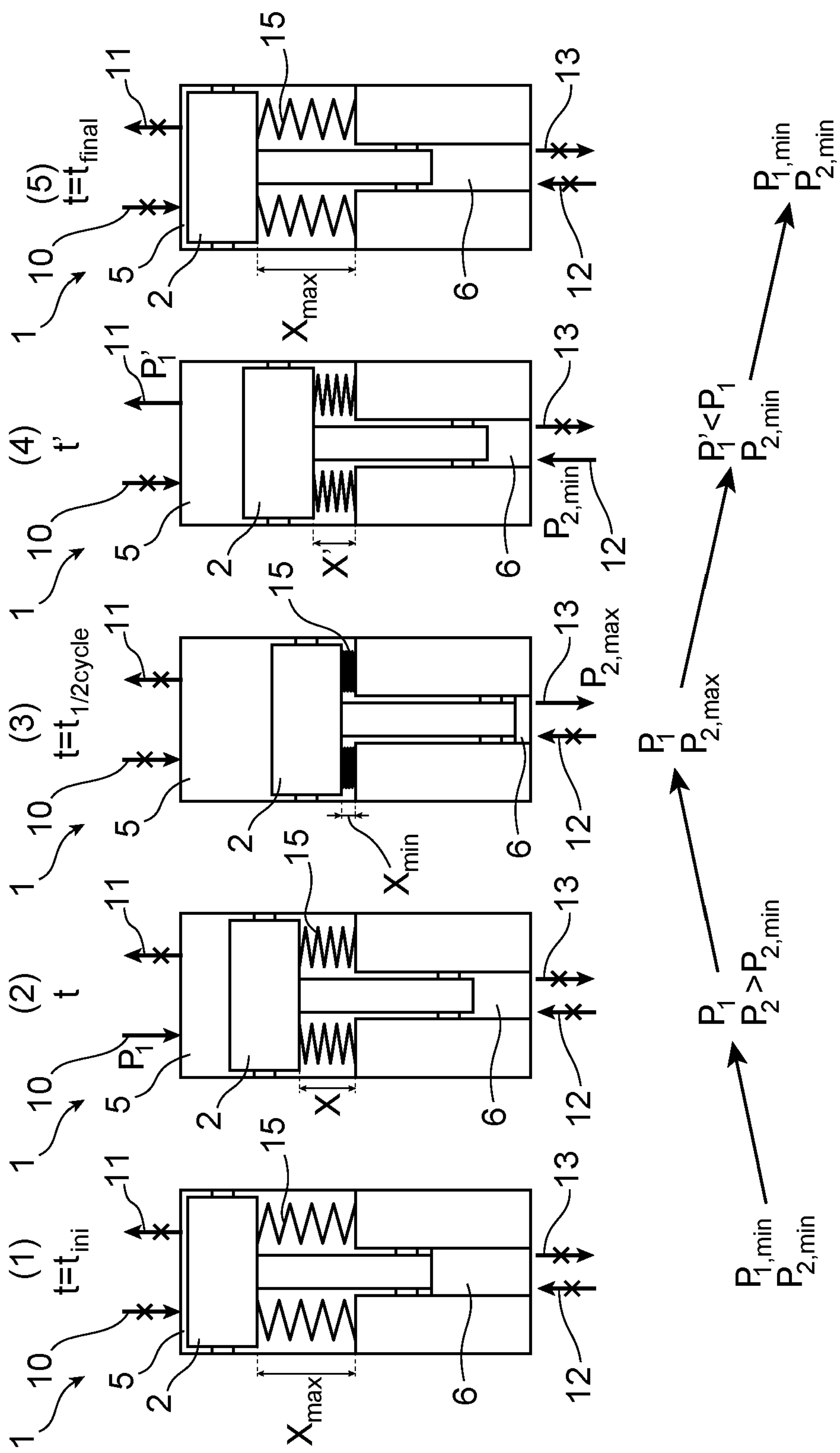
(1)
t=t_ini
(2)
t
(3)
t=t_1/2cycle
(4)
t'
(5)
t=t_final
X_max
X
X_min
X'
P_1
P'_1
P_2,max
P_2,min
P_1,min
P_2,min
P_1
P_2 >P_2,min
P_1
P_2,max
P'_1<P_1
P_2,min
P_1,min
P_2,min
1
2
5
6
10
11
12
13
15

FIG. 2

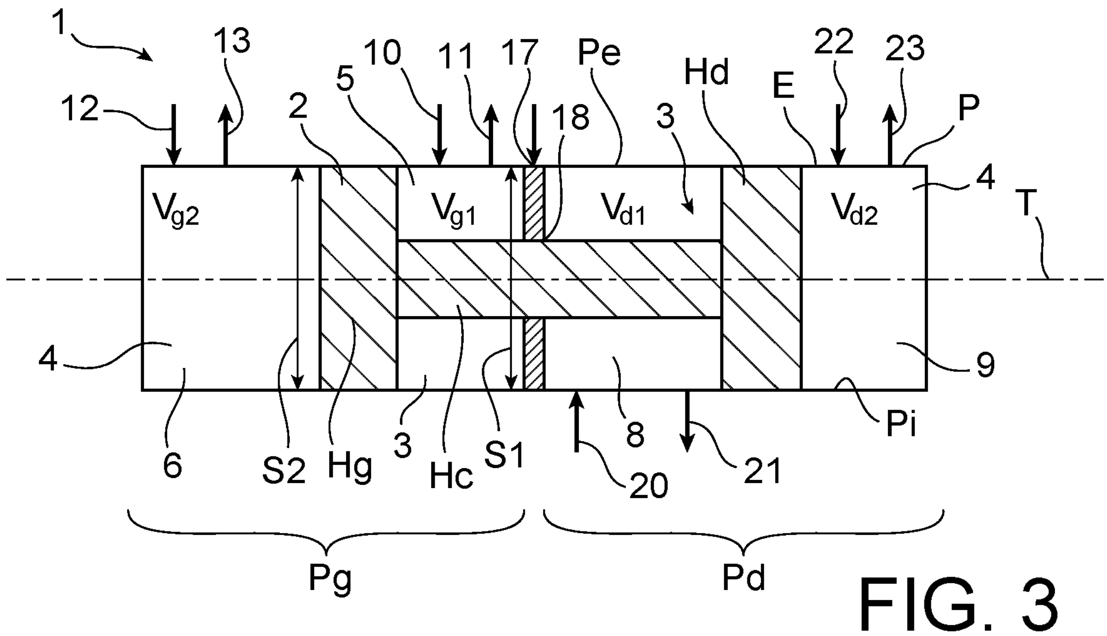
1
12
13
2
5
10
11
17
Pe
18
3
Hd
E
22
23
P
$V_{g2}$
$V_{g1}$
$V_{d1}$
$V_{d2}$
4
T
9
Pi
6
S2
Hg
3
Hc
S1
8
20
21
Pg
Pd

FIG. 3

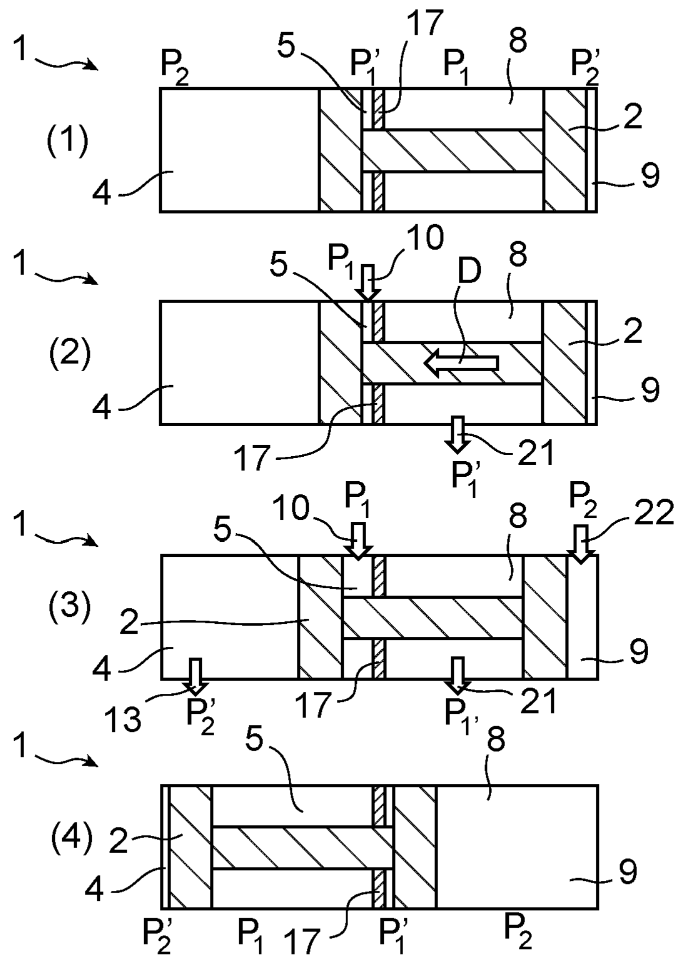
(1)
(2)
(3)
(4)
1
5
17
8
2
4
9
10
D
21
22
13
$P_1$
$P_2$
$P_1'$
$P_2'$

FIG. 4

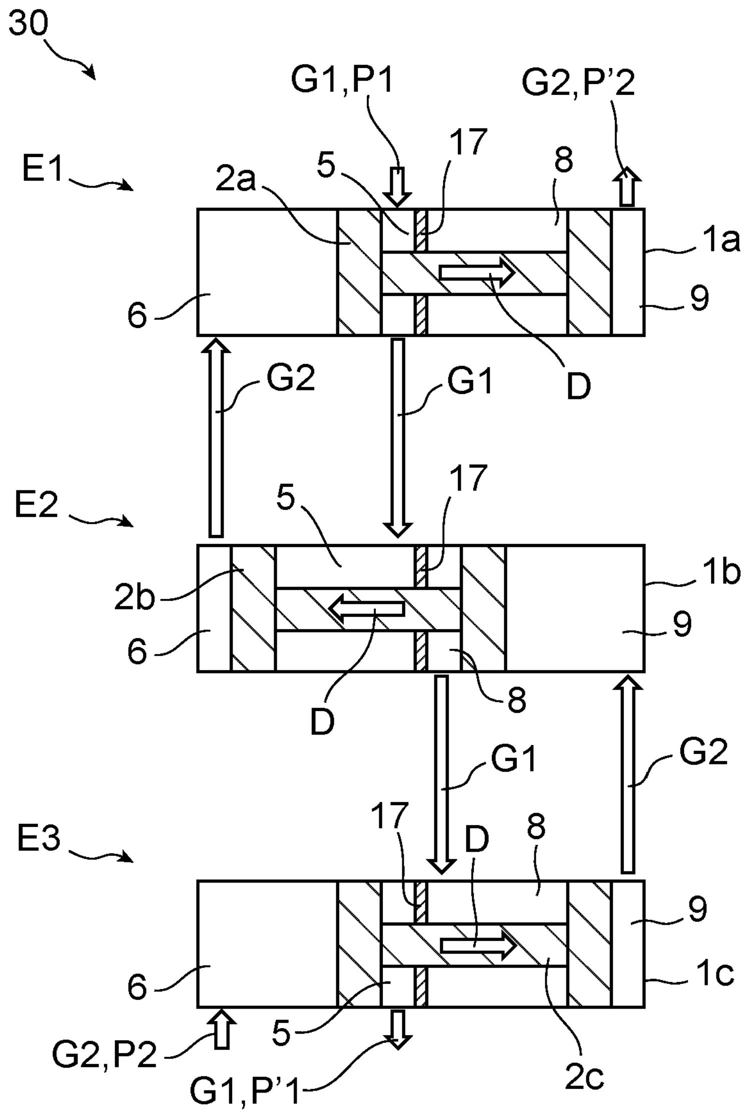
30
E1
G1,P1
G2,P'2
2a
5
17
8
1a
9
6
D
G2
G1
E2
5
17
1b
2b
9
6
D
8
G1
G2
E3
17
D
8
9
6
1c
5
G2,P2
G1,P'1
2c

FIG. 5

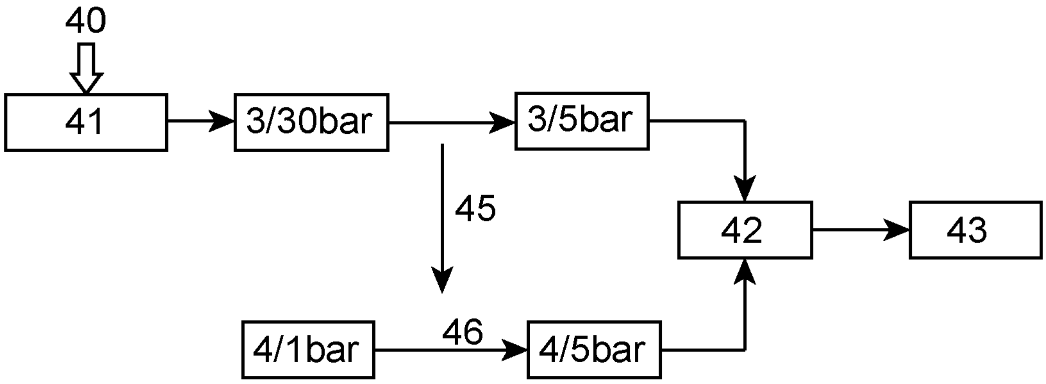
40
41
3/30bar
3/5bar
45
42
43
4/1bar
46
4/5bar

FIG. 6

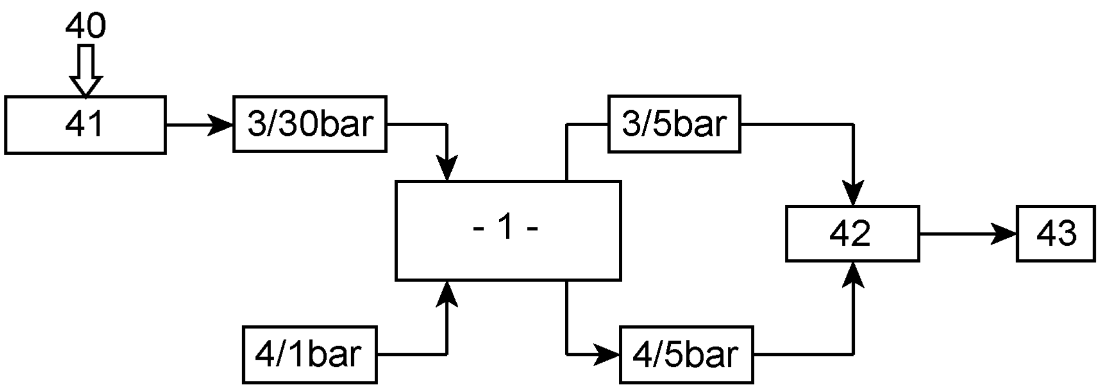
40
41
3/30bar
3/5bar
- 1 -
42
43
4/1bar
4/5bar

FIG. 7

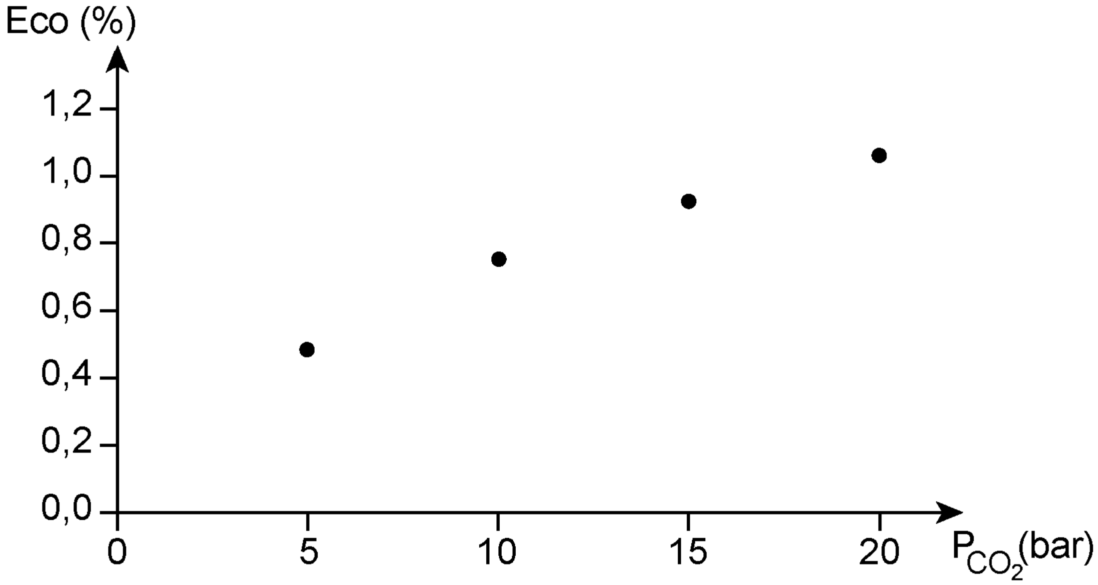


FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20070116588 A1
- WO 9201171 A1
- US 2016153445 A